# EUROPÄISCHE PATENTSCHRIFT

(11) **EP 3 112 859 B1**
(45) Veröffentlichungstag und Bekanntmachung des Hinweises auf die Patenterteilung: **24.01.2018**
(21) Anmeldenummer: 16175981.6
(22) Anmeldetag: 23.06.2016
(51) Int. Cl.: G01N 31/12, G01N 35/02, G01N 35/04, G01N 31/00

(54) **PROBENHALTER EINER ANALYSEEINRICHTUNG FÜR DIE ELEMENTARANALYSE UND ANALYSEEINRICHTUNG FÜR DIE ELEMENTARANALYSE**
SAMPLE HOLDER OF AN ANALYTICAL DEVICE FOR ELEMENTAL ANALYSIS, AND ANALYTICAL DEVICE FOR ELEMENTAL ANALYSIS
PORTE-ÉCHANTILLON D'UN DISPOSITIF D'ANALYSE POUR L'ANALYSE ÉLÉMENTAIRE, ET DISPOSITIF D'ANALYSE POUR L'ANALYSE ÉLÉMENTAIRE

(30) Priorität: 24.06.2015 DE 202015004524 U
(43) Veröffentlichungstag der Anmeldung: 04.01.2017
(73) Patentinhaber: C. Gerhardt GmbH & Co. KG, 53639 Königswinter (DE)
(72) Erfinder: Macke, Jan, 53639 Königswinter (DE)
(74) Vertreter: Grünecker Patent- und Rechtsanwälte PartG mbB

(56) Entgegenhaltungen:
- EP-A1- 1 586 895
- DE-A1- 2 730 214
- DE-A1- 3 116 049

## Beschreibung

Die folgende Erfindung betrifft einen Probenhalter einer Analyseeinrichtung für die Elementaranalyse, wie er beispielsweise aus der DE 31 16 049 A1 bekannt ist. Die vorliegende Erfindung betrifft insbesondere eine Analyseeinrichtung zur quantitativen Elementaranalyse mit einem solchen Probenhalter. Sie will dabei insbesondere eine Analyseeinrichtung für die Elementaranalyse zur Bestimmung des Stickstoffgehaltes in einer Probe angeben.

Die DE 31 16 049 A1 offenbart einen Probenhalter, der eine Schiene mit Ausnehmungen für einzusetzende Proben aufweist. Diese Schiene liegt auf einer Unterlage auf, die eine Auswurföffnung aufweist. Die Schiene ist an ihren Längsseiten von der Unterlage eingefasst, wodurch eine Führung gebildet wird. Ein Pneumatikmotor bewegt die Schiene entlang dieser Führung und jeweils eine Ausnehmung wird in Überdeckung mit der Auswurföffnung gebracht. Die Probe fällt dann durch die Auswurföffnung und wird einer Analyseeinrichtung zugeführt.

Eine Analyseeinrichtung für die Elementaranalyse ist beispielsweise aus der EP 1 586 895 A1 bekannt. Diese Analyseeinrichtung hat einen Probenhalter, der durch ein rotierendes Rad mit einer Vielzahl auf dem Umfang mit gleichem Radius verteilt angeordneten Bohrungen gebildet ist, die hintereinander über eine Abwerföffnung gebracht werden, um die Probe der Analyse zugänglich zu machen. Die Probe fällt von dort in einen Reaktor für die katalytische Verbrennung. Hierzu wird für die Zeit der Verbrennung Sauerstoff eingeleitet. Die Menge an Sauerstoff wird gemäß der verwendeten Einwaage und der Art der Probe automatisch berechnet, sie erfolgt demgemäß stöchiometrisch. Stromabwärts des Reaktors ist ein Reduktionsreaktor vorgesehen, der der Reduktion der Probe dient. Stromabwärts des Reduktionsreaktors ist ein Adsorber vorgesehen, dem ein Detektor nachgeschaltet ist, um den Gehalt der zu analysierenden Elemente in den Gasstrom zu ermitteln. Der Detektor wirkt mit einer Logikeinheit zusammen, der die von dem Detektor erfassten Daten übermittelt werden, um anhand dieser Daten eine in der Regel quantitative Beurteilung der Probe hinsichtlich des Elementargehaltes zu erstellen.

Soweit vorstehend im Strömungsweg des Gases hintereinander angeordnete Bauelemente vorgestellt wurden, bedeutet dies nicht, dass nach der vorliegenden Erfindung nicht weitere Elemente innerhalb der Analyseeinrichtung dazwischen oder dahinter geschaltet sein können. So kann - wie aus dem Stand der Technik bekannt - hinter dem Reduktionsreaktor eine Wasserfalle und/oder ein oder mehrere selbstregenerierbare Wasserabsorber vorgesehen sein, der aus dem Gas Wasser ausführt. Des Weiteren kann für die Abtrennung des Kohlendioxids aus dem Gasstrom eine Vorrichtung zur Regeneration von Adsorberelementen vorgesehen sein, welche zyklisch aus dem Gasstrom entnommen und der Desorption zugeführt werden können. Diese Regeneration kann außerhalb eines die in Anspruch 5 genannten Elemente enthaltenen Gehäuses einer Analysevorrichtung vorgesehen sein. Ebenso gut können die Regenerationsmittel auch innerhalb des Gehäuses vorgesehen und zur automatisierten Desorption angepasst ausgebildet sein, wie dies beispielsweise mit EP 1 586 895 A1 gelehrt wird.

Die vorliegende Erfindung will den an sich bekannten Probenhalter einer Analyseeinrichtung für die Elementaranalyse weiterbilden. Sie will dabei insbesondere die Probenzuführung für die Analyse verbessern und eine verbesserte Analyseeinrichtung angeben.

Zur Lösung dieses Problems wird mit der vorliegenden Erfindung ein Probenhalter mit den Merkmalen von Anspruch 1 vorgeschlagen. Ein solcher Probenhalter umfasst eine Lochfeldplatte. Die Lochfeldplatte hat eine Vielzahl von, üblicherweise in einem vorbestimmten Raster zueinander vorgesehene Löcher. Die Löcher sind üblicherweise durch die Lochfeldplatte durchgehend ausgebildet, also als Durchgangsbohrungen. Sie sind üblicherweise zylindrisch. Das Raster führt zu einer Ausbildung eines zumindest ersten Lochfeldes, in dem die Löcher üblicherweise mit konstantem Quer- und Längsabstand relativ zueinander vorgesehen sind. Diese Lochfeldplatte ist auf einer Unterlage beweglich, die mit einer Abwerföffnung zum Abwerfen einer bestimmten Probe aus einem Loch der Lochfeldplatte versehen ist. Die Abwerföffnung hat hierzu üblicherweise einen Durchmesser, der hinsichtlich Form und Größe dem Durchmesser der Löcher des Lochfeldes entspricht. Die Lochfeldplatte ist translatorisch frei auf der Unterlage in einem kartesischen X-Y-Koordinatensystem beweglich, um einzelne Löcher der Lochfeldplatte über die Abwerföffnung zu verbringen und die Probe dort abzuwerfen.

Die erfindungsgemäße Lösung erlaubt es, die Lochfeldplatte von der der Unterlage gegenüberliegenden Seite mit Proben zu befüllen. Gegenüber den vorbekannten Lösungen, bei denen die Lochfeldplatte entweder eindimensional verschoben oder mit einem rotierenden Rad gedreht wird, stellt die erfindungsgemäße Lösung eine flexiblere Möglichkeit bereit, Proben in die Analyseeinrichtung für die Elementaranalyse abzuwerfen. So können beispielsweise die Unterlage und die Beweglichkeit der Lochfeldplatte sowie die Abmessung der Lochfeldplatte so aufeinander abgestimmt sein, dass die Lochfeldplatte auch außerhalb der Abwerföffnung auf der Unterlage bewegt werden kann, d. h., die einzelnen Löcher der Lochfeldplatte an der Abwerföffnung vorbeigeführt werden können. Dadurch können unterschiedlich zueinander positionierte Lochfelder der Lochfeldplatte hintereinander der Abwerföffnung zugeführt und mit dieser zur Überdeckung gebracht werden. Durch die Anordnung der Löcher und das Einbringen der Proben in vorbestimmten Löcher der Lochfeldplatte ist damit nicht notwendigerweise auch die Reihenfolge für die Probenanalyse der einzelnen Proben in den Löchern vorgegeben. Des Weiteren besteht die Möglichkeit, die Löcher in einem vorbestimmten Raster vorzugsweise gebildet durch mehrere parallele Reihen von Löchern mit bevorzugt identischen Längs- und Querabständen in der Lochfeldplatte auszusparen, wodurch die Beschickung der Lochfeldplatte mit Proben deutlich vereinfacht wird.

Gemäß einer bevorzugten Weiterbildung der vorliegenden Erfindung hat die Lochfeldplatte ein erstes Lochfeld und ein zweites Lochfeld, die über einen verbreiterten Steg voneinander getrennt sind. Das erste Lochfeld hat üblicherweise ein Raster mit mehreren nebeneinanderliegenden Reihen von Löchern. Dieses erste Lochfeld dient der üblichen Aufnahme der zu analysierenden Probe. Das zweite Lochfeld kann wenige oder lediglich ein einziges Loch umfassen. Sofern wenige Löcher vorgesehen sind, können diese Löcher des zweiten Lochfeldes mit dem gleichen Längs- oder Querabstand zueinander vorgesehen sein wie die Löcher des Rasters des ersten Lochfeldes. Allerdings kann auch nur eine einzige Reihe von Löchern das zweite Lochfeld ausbilden.

Durch diese Ausgestaltung besteht die Möglichkeit, vorrangige Proben in das zweite Lochfeld einzubringen und die Steuerung zum Bewegen der Lochfeldplatte relativ zu der Unterlage so vorzunehmen, dass eine bevorzugte Probe außer der Reihe angefahren wird. Hierzu wird die Lochfeldplatte mit ihrem Steg zur Überdeckung mit der Abwerföffnung gebracht und entlang des Steges über die Abwerföffnung verfahren, bis diejenige Position des zweiten Lochfeldes erreicht ist, die die bevorzugt zu analysierende Probe enthält. Das an dieser Position befindliche Loch wird dann mit der Abwerföffnung zur Überdeckung gebracht.

Es versteht sich von selbst, dass die Bewegung der Unterlage relativ zu der Abwerföffnung automatisiert über Antriebe erfolgen kann, bevorzugt computergesteuert über eine Logikeinheit. Diese Logikeinheit ist üblicherweise einheitlich mit der Logikeinheit zur Verarbeitung der von dem Detektor übermittelten Daten verknüpft, so dass die Identität der jeweils abgeworfenen Probe unmittelbar an die Logikeinheit zur Verarbeitung der von dem Detektor übermittelten Daten weitergegeben werden kann.

Der verbreiterte Steg erstreckt sich üblicherweise parallel zu zwei sich parallel zueinander erstreckenden Reihen von Löchern, wobei die eine Reihe dem ersten Lochfeld und die andere Reihe dem zweiten Lochfeld zugeordnet ist. Üblicherweise geht der verbreiterte Steg von einer Randfläche zu der anderen Randfläche der Lochfeldplatte durch. Der Steg ist verbreitert, was bedeutet, dass dieser Steg breiter als derjenige Steg zwischen zwei benachbarten Reihen von Löchern beispielsweise des ersten Lochfeldes ist. Der Steg ist üblicherweise so breit ausgebildet, dass er die Abwerföffnung vollständig überdecken kann. So kann die Lochfeldplatte über die Abwerföffnung verfahren werden, ohne das diese auch nur teilweise freigegeben wir, um die priorisierte Probe des zweiten Lochfeldes anzufahren und aus dem zweiten Lochfeld abzuwerfen.

Eine besonders einfache Ausgestaltung der Analyseeinrichtung wird gemäß einer bevorzugten Weiterbildung der vorliegenden Erfindung dadurch angegeben, dass die Lochfeldplatte an einer Traverse gehalten ist, die in einer ersten Richtung relativ zu der Unterlage beweglich ist. Die Unterlage wird gemäß dieser bevorzugten Ausgestaltung durch eine Grundplatte ausgeformt, die von der Traverse umgriffen ist. Unterhalb der Unterlage ist vorzugsweise ein Antrieb vorgesehen, der die Bewegung der Lochfeldplatte durch die Bewegung der Traverse in die erste Richtung vermittelt. Dieser Antrieb kann beispielsweise ein Motor sein, der mit einer Zahnstange kämmt, die an einem die Grundplatte umgreifenden Führungssteg der Traverse vorgesehen ist. Unter der Unterlage sind üblicherweise Führungselemente vorgesehen, die die Bewegung der Traverse in der ersten Richtung führen. Die Traverse hat ferner vorzugsweise einen eigenständigen Antrieb, der mit einer Halterung für die Lochfeldplatte zusammenwirkt und die Lochfeldplatte entlang der Traverse in einer zweiten Richtung bewegt. Diese zweite Richtung ist die Längsrichtung der Traverse und erstreckt sich üblicherweise quer zu der ersten Richtung. Durch die so ausgebildete Traverse kann die Lochfeldplatte dementsprechend im X-Y-Koordinatensystem auf der Ebene der Unterlage bewegt werden. Auch die Bewegung in der zweiten Richtung wird üblicherweise durch ein Zahnrad eines Antriebs und eine sich parallel zu der Ebene der Lochfeldplatte erstreckende und mit der Lochfeldplatte gekoppelte Zahnstange vermittelt.

Zur leichteren Beschickung der Lochfeldplatte wird gemäß einer bevorzugten Weiterbildung der vorliegenden Erfindung eine Transferplatte vorgeschlagen, die mit einem zumindest dem ersten Lochfeld entsprechenden ersten Transferlochfeld versehen ist. Dieser Transferplatte ist eine Schiebeplatte zum unterseitigen Verschluss der Transferplatte zugeordnet. Die Schiebeplatte ist üblicherweise in einer Schiebeführung der Transferplatte gehalten und gegen Herausfallen in Richtung der an der Transferplatte ausgeformten Transferlöcher gesichert, indes in einer Richtung rechtwinklig hierzu verschieblich. Die Schiebeplatte schließt die in der Transferplatte ausgesparten Transferlöcher unterseitig ab. So kann die Transferplatte zunächst mit Proben bestückt werden. Die Transferplatte hat Formschlussmittel oder andere Positionierhilfen, um die beiderseitigen Lochfelder von Transferplatte einerseits und Lochfeldplatte andererseits zur Überdeckung zu bringen. Die Löcher der Lochfeldplatte sind dabei üblicherweise kodiert, wobei die Kodierung bevorzugt auf der Schiebeplatte vorgesehen ist, so dass die einzelnen Positionen innerhalb der Lochfeldplatte bei eingebrachter Schiebeplatte lesbar sind. Dies erleichtert das Zuordnen der Probe zu einer Position innerhalb der Lochfeldplatte. Die Transferplatte hat üblicherweise die gleichen Abmessungen wie die Lochfeldplatte, so dass eine fluchtende Anordnung der Löcher durch einfaches Überdecken der Ränder der beiderseitigen Lochplatten bewirkt werden kann. Danach wird die Schiebeplatte zwischen der Lochfeldplatte und der Transferplatte üblicherweise aus der Schiebeführung herausgezogen, so dass die Proben in die Löcher der Lochfeldplatte herunterfallen.

Die Analyseeinrichtung ist üblicherweise so ausgerichtet, dass die Löcher der Lochfeldplatte sich in der vertikalen Richtung erstrecken, so dass sowohl das Überführen von der Transferplatte auf die Lochfeldplatte wie auch das Abwerfen der Probe in Richtung auf den Reaktor mittels Schwerkraft erfolgen kann. Entgegen dieser Bewegungsrichtung strömt üblicherweise Gas auch durch die Abwerföffnung aus, so dass sicher verhindert wird, dass Umgebungsluft mit der Probe in den Reaktor für die katalytische Verbrennung gelangt und dort das Probenergebnis verfälscht. Die Analyseeinrichtung hat üblicherweise ein Ventil, um zwischen einer Sauerstoffströmung in der Leitung und einer Inertgasströmung zu schalten, so dass verunreinigungsfrei bei Inertgas die Probe abgeworfen und danach auf Sauerstoffgas umgestellt werden kann, um eine rückstandsfreie katalytische Verbrennung zu bewirken.

Die Transferplatte kann ein dem ersten und dem zweiten Lochfeld entsprechend ausgebildetes und jeweils mit diesem fluchtendes Lochfeld haben, so dass nach Aufsetzen der Transferplatte sowohl in üblicher Reihenfolge abzuarbeitende Proben wie auch Proben mit höherer Priorität beschickt werden können.

Gemäß einer bevorzugten Weiterbildung der vorliegenden Erfindung ist auf der Unterseite der Unterlage ein Schiebekolben vorgesehen, der dichtend in einem Ausschiebezylinder geführt ist. Der Schiebekolben hat eine Aufnahmebohrung, die regelmäßig die gleiche axiale Ausrichtung wie die Abwerföffnung hat. Diese Aufnahmebohrung ist zwischen einer ersten Stellung und einer zweiten Stellung zyklisch hin- und her beweglich. In der ersten Stellung fluchtet die Aufnahmebohrung mit der Abwerföffnung. In der zweiten Stellung fluchtet die Aufnahmebohrung mit einem Leitungsabschnitt der Leitung für das Inertgas, insbesondere das Helium, und den Sauerstoff, der üblicherweise in streng vertikaler Erstreckung unmittelbar zu dem Reaktor für die katalytische Verbrennung führt.

So kann die von der Unterlage in die Abwerföffnung abgeschobene Probe unmittelbar zu dem Reaktor gelangen. Der Schiebekolben ist üblicherweise in dem Ausschiebezylinder dichtend gehalten. Dazu sind üblicherweise unmittelbar benachbart zu der Aufnahmebohrung Nuten an dem Schiebekolben ausgespart, die Dichtringe halten, die mit der Innenumfangsfläche des Ausschiebezylinders zusammenwirken. Bereits der Ausschiebezylinder wird üblicherweise mit einer Quelle zumindest für das Inertgas verbunden, um einen unerwünschten Eintritt von atmosphärischer Luft in die Analyseeinrichtung durch die Abwerföffnung zu unterbinden. So bildet der besagte Ausschiebezylinder mit dem darin aufgenommen Schiebekolben eine Schleuse aus.

Gemäß einer bevorzugten Weiterbildung der vorliegenden Erfindung hat die Unterlage ein Schaufenster. Dieses Schaufenster erlaubt den Blick durch die Unterlage auf die Aufnahmebohrung in der zweiten Stellung. Damit kann beobachtet werden, dass die Probe tatsächlich in den Leitungsabschnitt der Leitung abgeworfen wird (worden ist), wenn sich die Aufnahmebohrung in der zweiten Stellung befindet. Das Schaufenster dichtet dabei den Bereich oberhalb der Aufnahmebohrung ab, so dass ein Eintritt von Umgebungsluft durch das Schaufenster in die Aufnahmebohrung und zu dem Reaktor vermieden wird. Das Schaufenster ist üblicherweise bündig und absatzfrei mit der Oberfläche der Unterlage vorgesehen, so dass auch Proben über das Schaufenster verschoben werden können, ohne dass Teile der Proben im Bereich des Schaufensters hängenbleiben.

Gemäß einer bevorzugten Weiterbildung der vorliegenden Erfindung ist eine Kamera vorgesehen, die auf die Abwerföffnung und/oder das Schaufenster gerichtet ist. Die Kamera ist üblicherweise mit einer zentralen Logikeinheit verbunden und überwacht optisch das Abwerfen der Probe durch die Abwerföffnung bzw. das Überführen der Probe in der zweiten Position der Aufnahmebohrung in den Leitungsabschnitt.

Weitere Einzelheiten und Vorteile der vorliegenden Erfindung geben das nachfolgende Ausführungsbeispiel in Verbindung mit der Zeichnung. In dieser Zeichnung ist:
- Fig. 1: eine perspektivische Seitenansicht auf die Oberseite des Ausführungsbeispiels;
- Fig.2: eine perspektivische Ansicht auf die Unterseite des Ausführungsbeispiels;
- Fig. 3: eine perspektivische Draufsicht auf die Oberseite des Ausführungsbeispiels;
- Fig. 4: eine Draufsicht auf das Ausführungsbeispiel bei abgenommener Transferplatte;
- Fig. 5: eine perspektivische Unteransicht des Ausführungsbeispiels, wobei Teile des Ausschiebezylinders transparent gezeichnet sind;
- Fig. 6: eine perspektivische Draufsicht auf die Oberseite eines leicht abgewandelten zweiten Ausführungsbeispiels, und
- Fig. 7: eine schematische Darstellung der wesentlichen Komponenten einer Elementaranalyse nach Dumas.

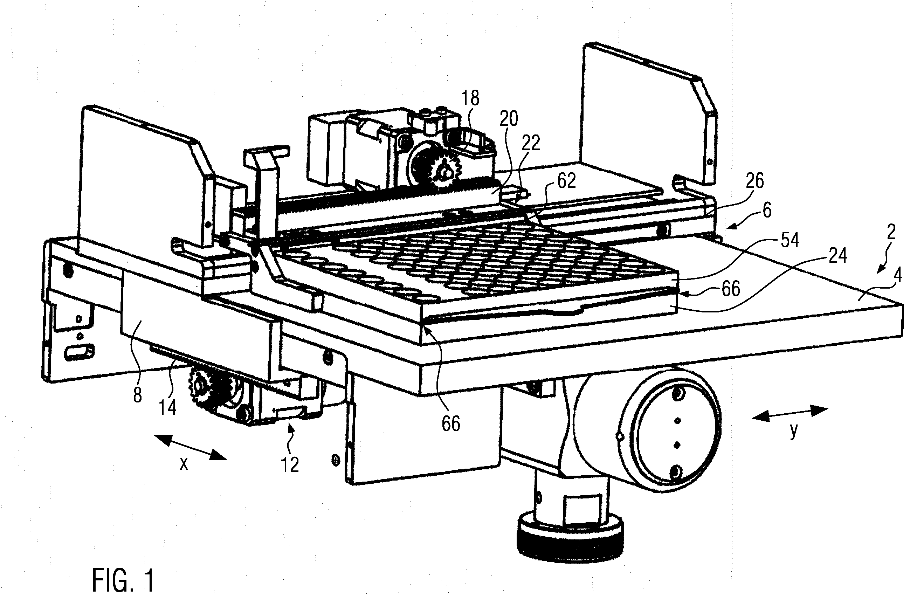

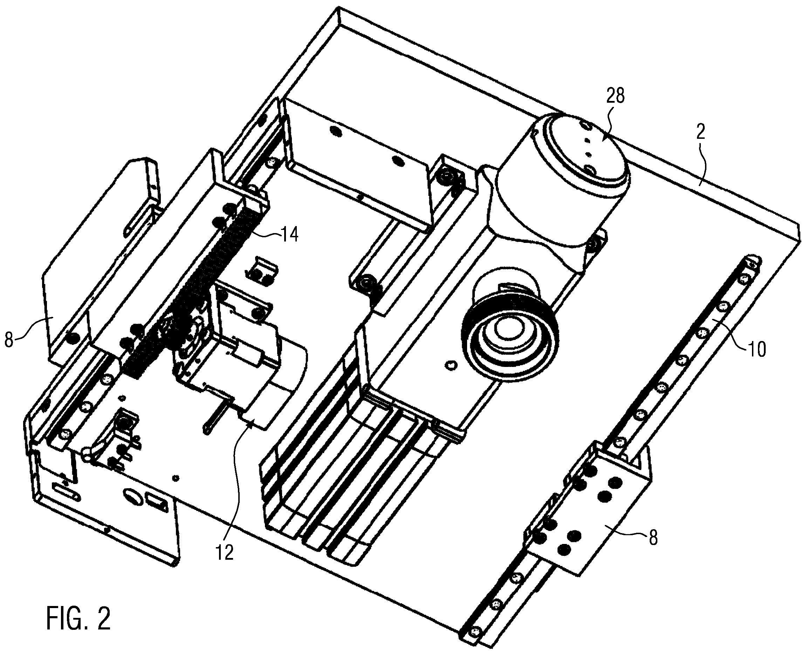

Die Fig. 1 und 2 lassen die wesentlichen Teile des Ausführungsbeispiels erkennen. Dieses umfasst eine Grundplatte 2, die eine ebene Unterlage 4 ausbildet und oberseitig eine Traverse 6 führt, die in der Richtung des Richtungspfeils X beweglich und mit der Grundplatte 2 verbunden ist. Hierzu hat die Traverse 6 seitliche Schenkel 8, die die Grundplatte 2 umgreifen (vgl. Fig. 2). Dort sind Längsführungen 10 sowie ein erster Antrieb 12 vorgesehen, der über ein Zahnrad mit einer ersten Zahnstange 14 kämmt, die an einem der Schenkel 8 befestigt ist. Dadurch ist die Möglichkeit geschaffen, die Traverse 6 in einer ersten Richtung, d. h. der X-Richtung relativ zu der Unterlage 4 zu bewegen.

Die Traverse 6 hat eine Abdeckung 16, die einen zweiten Antrieb 18 abdeckt, der über ein Zahnrad mit einer zweiten Zahnstange 20 kämmt, die mit einer Halterung 22 für eine Lochfeldplatte 24 verbunden ist. Die Traverse 6 bildet eine Querführung 26 aus, über welche die Halterung 22 in der zweiten Richtung, d. h. der in Fig. 1 eingezeichneten Y-Richtung beweglich ist. Die beiden Antriebe 12, 18 sind mit einer Logikeinheit steuerungsmäßig gekoppelt, die die beiden Antriebe 12, 18 so steuert, dass die Lochfeldplatte 24 an einer vorbestimmten Position gehalten bzw. angeordnet wird.

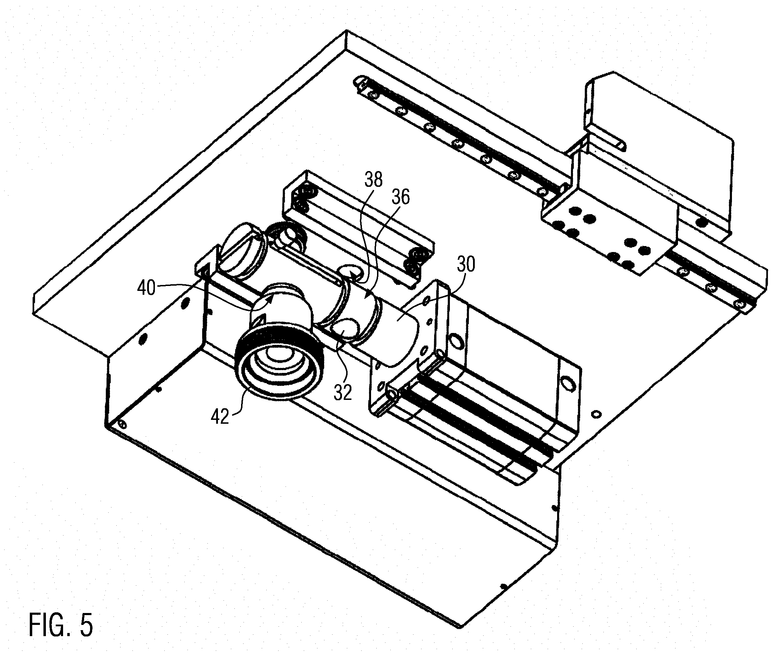

Fig. 2 zeigt eine mit Bezugszeichen 28 gekennzeichnete Schleuse zum Einbringen einer Probe. Details dieser Schleuse 28 sind der Fig. 5 zu entnehmen. Die Schleuse 28 hat (vgl. Fig. 5) einen beweglichen Schiebekolben 30, der von einer Aufnahmebohrung 32 durchsetzt und in einem Ausschiebezylinder 34 verschieblich gehalten ist. Der Ausschiebezylinder 34 hat eine Einbringöffnung 36, die mit einer in der Grundplatte 2 ausgesparten Abwerföffnung 38 fluchtet, und eine Ausbringöffnung 40, die mit einem Leitungsabschnitt 42 fluchtet, der mit dem Ausschiebezylinder 34 verbunden und zum abgedichteten Verschrauben eines nicht gezeigten Reaktors für die katalytische Verbrennung angepasst ausgebildet ist.

Die weiteren, die Analyseeinrichtung als solches bildenden Bestandteile sind vorwiegend nicht gezeigt. Insofern wird auf die EP 1 586 895 A1 verwiesen, die die wesentlichen Komponenten für eine Analyseeinrichtung, insbesondere eine Analyseeinrichtung für die Analyse von Stickstoff in Proben, offenbart. Auf diese Offenbarung wird insofern verwiesen.

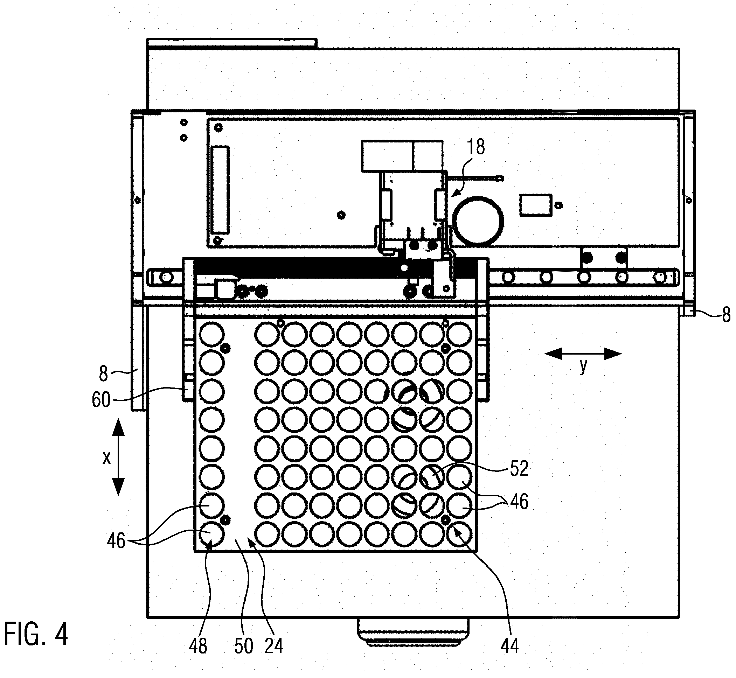

Die in Fig. 4 gezeigte Lochfeldplatte 24 hat ein erstes Lochfeld 44 mit mehreren, in gleichmäßigen Abständen relativ zueinander vorgesehenen Reihen von Löchern 46 und ein zweites Lochfeld 48, welches durch eine einzige Reihe von Löchern 46 gebildet ist. Zwischen den beiden Lochfeldern 44, 48 ist ein verbreiterter Steg 50 vorgesehen.

Die Fig. 4 lässt ferner in Blickrichtung hinter der Lochfeldplatte 24 die Abwerföffnung 38 sowie ein mit Bezugszeichen 52 gekennzeichnetes Schaufenster erkennen, welches durch die Wandung des Ausschiebezylinders 34 den Blick auf die Aufnahmebohrung 32 in der zweiten Stellung des Schiebekolbens 30 erlaubt, in welcher die Aufnahmebohrung 32 mit dem Leitungsabschnitt 42 fluchtet.

Wie Fig. 4 vermittelt, hat der Steg 50 eine gegenüber den Zwischenstegen zwischen Reihen des ersten Lochfeldes 44 größere Breite. Die Breite des Steges 50 ist dabei so gewählt, dass sie den Durchmesser der Abwerföffnung 38 geringfügig überragt und damit geeignet ist, die Abwerföffnung 38 abzudecken.

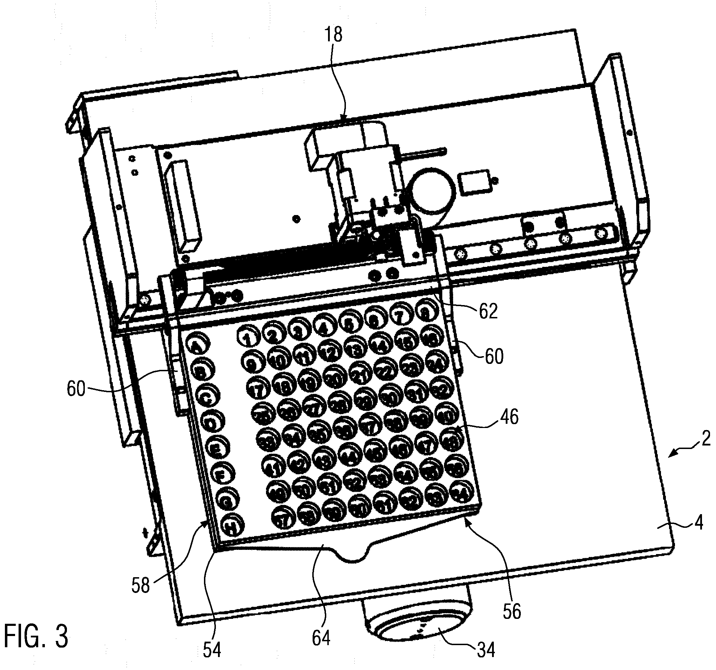

Die Fig. 1 und 3 zeigen das erste Ausführungsbeispiel zusammen mit einer Transferplatte 54, die in den besagten Figuren auf die Lochfeldplatte 24 aufgelegt ist. Die Transferplatte 54 hat die gleichen Abmessungen wie die Lochfeldplatte 24. Auch hat die Transferplatte 54 erste und zweite Transferlochfelder 56, 58, deren Löcher mit gleichem Abstand bzw. Raster wie die Löcher des ersten und zweiten Lochfeldes 44, 48 der Lochfeldplatte 24 vorgesehen sind. Zur leichteren Positionierung sind die Lochfeldplatte 24 haltende und mit der zweiten Zahnschiene 20 verbundene Haltearme 60 sowie ein sich rechtwinklig hierzu erstreckender Träger 62, die mit dem zweiten Antrieb 18 verbunden sind, mit einer in etwa der Höhe der Lochfeldplatte 24 und der Transferplatte 54 entsprechenden Höhe über der Unterlage 4 vorgesehen. Dadurch wird eine Aufnahmeöffnung geschaffen, in welche die Transferplatte 54 zur genauen Überdeckung der beiderseitigen Löcher der Lochfeldplatte 24 und der Transferplatte 54 durch Anordnen der Platten 24, 54 übereinander eingebracht werden kann. Fig. 1 lässt ferner eine Schiebeplatte 64 erkennen, die oberhalb der Lochfeldplatte 24 vorgesehen ist und in einer Schiebeführung 66, die an der Transferplatte 54 ausgespart ist, verschieblich an der Transferplatte 54 gehalten ist. Die Schiebeplatte 64 verschließt die Löcher der Transferlochfelder 56, 58 unterseitig ab. So kann die Transferplatte 54 an einem Laborplatz zunächst beschickt und danach mit der Schiebeplatte 64 in Position über der Lochfeldplatte 24 angeordnet und daran ausgerichtet werden. Danach wird die Schiebeplatte 64 gezogen, wodurch die Proben jeweils von den Löchern der Transferplatte 54 in die entsprechenden Löcher 46 der Lochfeldplatte 24 fallen.

Wie insbesondere Fig. 3 erkennen lässt, sind an der Oberseite der Schiebeplatte 64 Probenpositionen eingeschrieben, so dass jedem einzelnen Loch der Transferplatte 54 und damit jedem einzelnen Loch der Lochfeldplatte 24 Probenpositionen zugeordnet sind. Dabei entsprechen die Probenpositionen 1 bis 64 den Positionen des ersten Lochfeldes. Diese Löcher 46 haben konstante Quer- und Längsabstände, d. h. konstante Abstände sowohl in X- als auch in Y-Richtung. Die Löcher A-H sind Löcher des zweiten Lochfeldes 2, die lediglich in X-Richtung hintereinander vorgesehen sind, allerdings dort mit dem Abstand der Löcher 46 des ersten Lochfeldes 44.

Nach dem Beschicken der Lochfeldplatte 24 durch Ziehen der Schiebeplatte 64 wird die Transferplatte 54 abgehoben, um diese erneut zu beschicken, während die automatisierte Analyse durch das Ausführungsbeispiel durchgeführt wird. Dazu werden die Antriebe 12 und 18 gesteuert betrieben, um die Lochfeldplatte 24 mit einem ausgewählten Loch 46 über die Abwerföffnung 38 zu bringen. Dadurch wird die Probe aus dem entsprechenden Loch 46 abgeworfen, und zwar in die Aufnahmebohrung 32 des Schiebekolbens 30, der sich in der ersten Position befindet. Danach wird der Schiebekolben 30 in dem Ausschiebezylinder 34 verschoben, so dass die Aufnahmebohrung 32 mit dem Leitungsabschnitt 42 fluchtet. Aufgrund der Schwerkraft wird die Probe somit durch die Ausbringöffnung 40 in den Leitungsabschnitt 42 und damit den Reaktor für die katalytische Verbrennung abgeworfen. Die Probe wird in an sich bekannter Weise unter Zugabe von Sauerstoff verbrannt. Die Verbrennungsgase werden behandelt, um beispielsweise Wasser abzutrennen. Danach werden die Verbrennungsgase dem Adsorber zugeführt, so dass die für die Analyse interessierenden Inhaltstoffe abgetrennt und über den Detektor gemessen werden können.

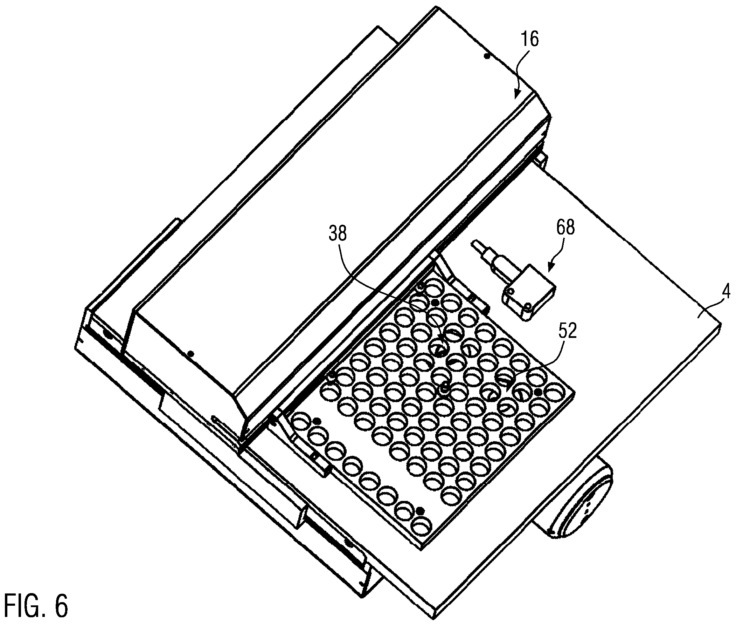

Die Fig. 6 zeigt ein alternatives Ausführungsbeispiel mit einer Kamera 68, die oberhalb der Unterlage 4 vorgesehen ist und in deren Blickfeld sich sowohl die Abwerföffnung 38 wie auch das Schaufenster 52 befindet. Die Kamera 68 ist üblicherweise in axialer Verlängerung der Achse des Schaufensters 52 vorgesehen und kann somit auch den Leitungsabschnitt 42 optisch erfassen. Die Kamera 68 ist mit der zentralen Logikeinheit verbunden. Sie kann sowohl das Abwerfen der Probe aus der Lochfeldplatte 24 durch die Abwerföffnung 38 erkennen, wie auch das Abwerfen der Probe aus der Aufnahmebohrung 32 in den Leitungsabschnitt 42.

An den Ausschiebezylinder 34 ist eine Gasleitung angeschlossen, durch welche Inertgas, beispielsweise Helium, in das Innere des Ausschiebezylinders 34 eingebracht werden kann. Dadurch ist es möglich, in dem Ausschiebezylinder 34 zunächst originär enthaltene Umgebungsluft vor der Analyse durch die Abwerföffnung 38 auszutreiben, um innerhalb der Analyseeinrichtung eine Inertgasatmosphäre zu schaffen, die den zu messenden Stoff/das zu ermittelnde Element der Probe nicht enthält.

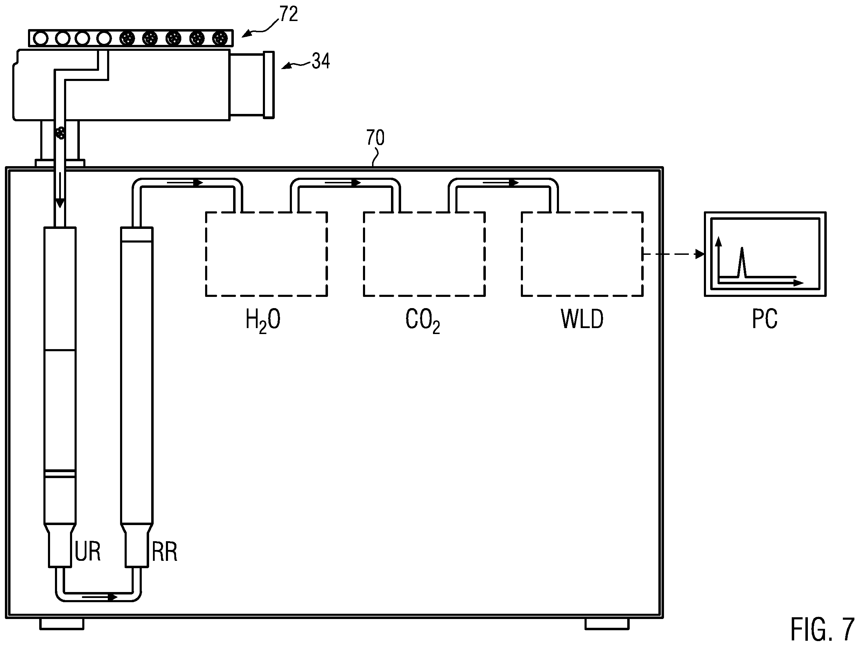

Der weitere Weg der Probe von dem Leitungsabschnitt 42 ist in Fig. 7 schematisch dargestellt. Die Probe fällt in einen Reaktor UR für eine katalytische Verbrennung. Die dabei entstehenden Gase werden einem Reduktionsreaktor RR zugeführt. Danach wird in dem Verbrennungsgas enthaltenes Wasser H₂O adsorbiert. In dem Gas enthaltenes CO₂ wird danach aus dem Gas entfernt. Schließlich wird der Stickstoffgehalt gemessen (bei WLD) und der gemessene Wert über einen Rechner (PC) analysiert und ausgegeben. Der in Fig. 7 mit Bezugszeichen 70 gekennzeichnete Rahmen verdeutlicht dabei diejenigen Elemente der Analyseeinrichtung, die sich innerhalb eines Gehäuses befinden, wobei auf der Oberseite des Gehäuses 70 der Ausschiebezylinder 34 mit dem zuvor unter Bezugnahme auf die Figuren 1 bis 6 beschriebenen Probenhalter vorgesehen ist, wobei der Probenhalter lediglich schematisch durch eine Lochscheibe (72) angedeutet ist.

### Bezugszeichenliste

- 2: Grundplatte
- 4: Unterlage
- 6: Traverse
- 8: Schenkel
- 10: Längsführung
- 12: erster Antrieb
- 14: erste Zahnstange
- 16: Abdeckung
- 18: zweiter Antrieb
- 20: zweite Zahnstange
- 22: Halterung
- 24: Lochfeldplatte
- 26: Querführung
- 28: Schleuse
- 30: Schiebekolben
- 32: Aufnahmebohrung
- 34: Ausschiebezylinder
- 36: Einbringöffnung
- 38: Abwerföffnung
- 40: Ausbringöffnung
- 42: Leitungsabschnitt
- 44: erstes Lochfeld
- 46: Loch
- 48: zweites Lochfeld
- 50: verbreiterter Steg
- 52: Schaufenster
- 54: Transferplatte
- 56: erstes Transferlochfeld
- 58: zweites Transferlochfeld
- 60: Haltearme
- 62: Träger
- 64: Schiebeplatte
- 66: Schiebeführung
- 68: Kamera
- 70: Rahmen
- 72: Lochscheibe

## Patentansprüche

1. Probenhalter einer Analyseeinrichtung für die Elementaranalyse, mit einer Lochfeldplatte (24), die mittels eines Antriebes (12, 18) auf einer Unterlage (4) beweglich ist, die mit einer Abwerföffnung (38) zum Abwerfen einer Probe versehen ist, **dadurch gekennzeichnet, dass** die Lochfeldplatte (24) translatorisch frei auf der Unterlage (4) in einem kartesischen X-Y-Koordinatensystem beweglich ist.

2. Probenhalter nach Anspruch 1, **dadurch gekennzeichnet, dass** die Lochfeldplatte (24) ein erstes Lochfeld (44) und ein zweites Lochfeld (48) umfasst, die über einen Steg (50) voneinander getrennt sind, der breiter ist als ein Steg zwischen zwei benachbarten Reihen von Löchern des ersten Lochfelds (44).

3. Probenhalter nach Anspruch 1 oder 2, **dadurch gekennzeichnet, dass** die Lochfeldplatte (24) an einer in einer ersten Richtung (X) relativ zu einer die Unterlage (4) ausbildenden Grundplatte (2) beweglichen und die Grundplatte (2) umgreifenden Traverse (6) gehalten ist und in Längsrichtung der Traverse (6) zu dieser verschieblich gehalten ist.

4. Probenhalter nach Anspruch 2, **gekennzeichnet durch** eine Transferplatte (54), die mit einem zumindest dem ersten Lochfeld (44) entsprechenden ersten Transferlochfeld (56, 58) versehen ist, der eine Schiebeplatte (64) zum unterseitigen Verschluss der Transferplatte (54) zugeordnet ist, die nach dem Aufsetzen der Transferplatte (54) auf die Lochfeldplatte (24) zwischen der Lochfeldplatte und der Transferplatte herausziehbar ist.

5. Analyseeinrichtung für die Elementaranalyse mit einem Probenhalter nach einem der vorherigen Ansprüche, einer Leitung (70) für Sauerstoff und Inertgas, einem Reaktor für die katalytische Verbrennung einer Probe, einem stromabwärts des Reaktors vorgesehenen Reduktionsreaktor, einem stromabwärts des Reduktionsreaktors vorgesehenen Adsorber, einem stromabwärts des Adsorbers vorgesehenen Detektor und einer Logikeinheit zur Verarbeitung der von dem Detektor übermittelten Daten.

6. Analyseeinrichtung nach Anspruch 5, **gekennzeichnet durch** einen auf der Unterseite der Unterlage (4) vorgesehenen, dichtend in einem Ausschiebezylinder (34) geführten Schiebekolben (30) mit einer Aufnahmebohrung (32), die zwischen einer ersten Stellung, in der die Aufnahmebohrung (32) fluchtend zu der Abwerföffnung (38) angeordnet ist, und einer zweiten Stellung, der die Aufnahmebohrung (32) fluchtend zu einem zu dem Reaktor führenden Leitungsabschnitt (42) der Leitung angeordnet ist, zyklisch beweglich ist.

7. Analyseeinrichtung nach Anspruch 6, **gekennzeichnet durch** ein in der Unterlage (4) ausgespartes Schaufenster (52) zur Überprüfung der Position der Aufnahmebohrung (32) in der zweiten Stellung.

8. Analyseeinrichtung nach einem der Ansprüche 5 bis 7, **gekennzeichnet durch** eine auf die Abwerföffnung (38) und/oder das Schaufenster (52) gerichtete Kamera (68).

## Claims

1. Sample holder of an analytic device for the elementary analysis with a perforated field plate (24) that is movable on a base (4) by means of a drive (12, 18) and that is equipped with an ejection opening (38) to eject a sample, **characterized in that** the perforated field plate (24) is freely movable on the base (4) in a translational way in a Cartesian X-Y coordinate system.

2. Sample holder according to Claim 1, **characterized in that** the perforated field plate (24) comprises a first hole field (44) and a second hole field (48) that are separated from each other by means of a crosspiece (50), which is wider than the crosspiece between two neighboring rows of holes of the first hole field (44).

3. Sample holder according to Claim 1 or 2, **characterized in that** the perforated field plate (24) is held on a crossbeam (6), which is movable in a first direction (X) in relation to a base plate (2) that forms the base (4) and which encompasses the base plate (2), and that it is held movably in the longitudinal direction of the crossbeam (6) in relation to such crossbeam.

4. Sample holder according to claim 2, **characterized by** a transfer plate (54) that is equipped with a first transfer hole field (56, 58) that corresponds at least to the first hole field (44) to which a sliding plate (64) is assigned for closing the transfer plate (54), which can be pulled out between the perforated field plate and the transfer plate after putting the transfer plate (54) onto the perforated field plate (24), on the bottom side.

5. Analytical device for the elementary analysis comprising a sample holder according to any one of the preceding claims, a line (70) for oxygen and inert gas, a reactor for catalytic combustion of a sample, a reduction reactor provided downstream of the reactor, an adsorber provided downstream of the reduction reactor, a detector provided downstream of the adsorber and a logic unit for processing of the data transmitted by the detector.

6. Analytical device according to claim 5, **characterized by** a sliding piston (30), which is provided on the bottom side of the base (4) and guided in a sealing way in an extending cylinder (34), with a receptacle hole (32) that is cyclically movable between a first position, in which the receptacle hole (32) is arranged in alignment with the ejection opening (38), and a second position in which the receptacle hole (32) is disposed in alignment with a line section (42) of the line that leads to the reactor.

7. Analytical device according to Claim 6, **characterized by** a display window (52) left out in the base (4) to check the positioning of the receptacle hole (32) in the second position.

8. Analytical device according to any one of the claims 5 to 7, **characterized by** a camera (68) that points towards the ejection opening (38) and/or the display window (52).

## Revendications

1. Porte-échantillons d'un appareil d'analyse pour l'analyse élémentaire, comportant une platine à zone de trous (24), qui est mobile, au moyen d'un entraînement (12, 18), sur un support d'appui (4) pourvu d'une ouverture d'éjection (38) pour l'éjection d'un échantillon, **caractérisé en ce que** la platine à zone de trous (24) est librement déplaçable en translation sur le support d'appui (4), dans un système de coordonnées cartésien X-Y.

2. Porte-échantillons selon la revendication 1, **caractérisé en ce que** la platine à zone de trous (24) comprend une première zone de trous (44) et une deuxième zone de trous (48), qui sont séparées l'une de l'autre par l'intermédiaire d'une nervure (50), qui est plus large qu'une nervure entre deux rangées voisines de trous de la première zone de trous (44).

3. Porte-échantillons selon la revendication 1 ou la revendication 2, **caractérisé en ce que** la platine à zone de trous (24) est maintenue sur une traverse (6), qui entoure une plaque de base (2) formant le support d'appui (4) et est mobile dans une première direction (X) par rapport à ladite plaque de base (2), et est maintenue coulissante par rapport à la traverse (6) dans la direction longitudinale de celle-ci.

4. Porte-échantillons selon la revendication 2, **caractérisé par** une plaque de transfert (54), qui est pourvue d'une première zone de trous de transfert (56, 58) en correspondance avec au moins ladite première zone de trous (44), et à laquelle est associée une plaque coulissante (64) assurant la fermeture du côté inférieur de la plaque de transfert (54) et pouvant, après l'application de la plaque de transfert (54) sur la platine à zone de trous (24), être retirée de l'espace entre la platine à zone de trous et la plaque de transfert.

5. Appareil d'analyse pour l'analyse élémentaire comprenant un porte-échantillons selon l'une des revendications précédentes, une conduite (70) pour de l'oxygène et du gaz inerte, un réacteur pour la combustion catalytique d'un échantillon, un réacteur de réduction prévu en aval dudit réacteur de combustion, un adsorbeur prévu en aval du réacteur de réduction, un détecteur prévu en aval de l'adsorbeur, et une unité logique pour assurer le traitement des données transmises par le détecteur.

6. Appareil d'analyse selon la revendication 5, **caractérisé par** un piston coulissant (30) prévu sur le côté inférieur du support d'appui (4), guidé de manière étanche dans un cylindre d'extraction (34) et comportant un alésage de réception (32), qui est mobile de manière cyclique entre une première position dans laquelle l'alésage de réception (32) est agencé en alignement avec l'ouverture d'éjection (38), et une deuxième position dans laquelle l'alésage de réception (32) est agencé en alignement avec un tronçon de conduite (42) de la conduite, qui mène au réacteur.

7. Appareil d'analyse selon la revendication 6, **caractérisé par** un hublot d'observation (52) dégagé dans le support d'appui (4) pour vérifier la position de l'alésage de réception (32) dans ladite deuxième position.

8. Appareil d'analyse selon l'une des revendications 5 à 7, **caractérisé par** une caméra (68) dirigée sur l'ouverture d'éjection (38) et/ou le hublot d'observation (52).
